# EUROPEAN PATENT APPLICATION

(11) **EP 4 549 520 A1**
(43) Date of publication of application: **07.05.2025**
(21) Application number: 23306915.2
(22) Date of filing: 06.11.2023
(51) Int. Cl.: C09D 4/00, B33Y 70/00, C08F 222/10, C08F 2/48, C08G 75/045, C08K 3/016, C09D 133/14, C09D 5/18, C08K 3/32

(54) **FLAME RETARDANT CURABLE COMPOSITIONS**

(71) Applicant: ARKEMA FRANCE, 92800 Puteaux (FR)
(72) Inventor: MANAHAN, Olivia, BOULDER, 80301 (US); DAVENPORT, Amelia, BOULDER, 80301 (US); CRAMER, Neil, BOULDER, 80301 (US); NAZE, Thomas, 60550 VENEUIL EN HALATTE (FR); GOSSIAUX, Alexandre, 60550 VENEUIL EN HALATTE (FR)
(74) Representative: Arkema Patent

(57) **Abstract**

A flame retardant curable composition comprises at least one isocyanurate-containing monomer having at least one (meth)acrylate group in an amount of at least 25 wt% based on the total weight of polymerizable components; a phosphorus-containing non-reactive filler in an amount of at least 5 wt% based on the total weight of polymerizable components, and a free radical photoinitiator, wherein the phosphorus-containing non-reactive filler is in a solid form at room temperature and contains at least 10% by weight of phosphorus, and wherein the composition is substantially free of any halogens. The cured composition and three dimensional printed articles comprising the cured composition are also described.

## Description

### BACKGROUND OF THE INVENTION

Flame retardant compositions are commonly used in numerous applications but may have the drawback of requiring halogens or metals or flame retardant thermosets (FR thermosets). These additional constituents when utilized to achieve the desired degree of flame retardancy can result in loss of flame retardancy over time when subjected to high temperatures or poor resolution when 3D printed. Halogen-containing flame retardant compositions, in particular, are toxic and environmentally harmful.

The compositions of the present invention address the above drawbacks by achieving flame retardancy without requiring substantial amounts of halogens, metals, or FR thermosets. In addition, the compositions maintain their flame retardancy over time by employing fillers that do not leach out over time under high temperatures and also provide good resolution when 3D printed.

### SUMMARY OF THE INVENTION

An aspect of the invention is a curable composition comprising, consisting essentially of, or consisting of:
- at least 25 wt%, based on the total weight of the polymerizable components, of at least one isocyanurate-containing monomer having at least one (meth)acrylate group;
- at least 5 wt%, based on the total weight of the polymerizable components, of a phosphorus-containing non-reactive filler, where the filler is in a solid form at room temperature and contains at least 10% by weight of phosphorus; and
- a free radical photoinitiator,
wherein the composition is substantially free of any halogens (such as halogen-containing compounds).

An aspect of the invention is a cured composition formed from the curable composition as described herein.

An aspect of the invention is an article comprising the cured composition as described herein.

An aspect of the invention is a three dimensional (3D) printed article comprising the cured composition as described herein.

An aspect of the invention is a method of increasing the flame retardancy of an article comprising coating at least one surface of the article with the curable composition as described herein.

Various embodiments of the invention are described in more detail throughout this disclosure. Both the foregoing general description and the following detailed description provide exemplary embodiments and provide an overview or framework for understanding the nature and character of the technology. Additionally, the descriptions are meant to be merely illustrative, and are not intended to limit the scope of the claims in any manner.

### DETAILED DESCRIPTION OF THE INVENTION

### Definitions

The term "actinic light source" refers to a source of electromagnetic radiation capable of initiating photochemical reactions with at least a portion of its electromagnetic radiation in the ultra-violet range (100 nm to 400 nm).

The term "aliphatic" refers to saturated and unsaturated hydrocarbons, straight chain (i.e., unbranched) or branched, cyclic or acyclic, excluding aromatic groups, and includes, but is not limited to, alkyl, alkenyl, alkynyl. Illustrative aliphatic groups thus include, but are not limited to, for example, methyl, ethyl, n-propyl, isopropyl, allyl, n-butyl, sec-butyl, isobutyl, tert-butyl, n-pentyl, sec-pentyl, isopentyl, n-hexyl, sec-hexyl, alkenyl groups such as ethenyl, propenyl, 1-methyl-2-butene-1-yl, and alkynyl groups such as ethynyl, 2-propynyl (propargyl), and 1-propynyl.

The term "cationically curable monomer" or "cationically curable compound" or "cationically polymerizable monomer" or "cationically polymerizable compound" refers to a monomer/compound comprising a curable/polymerizable functional group that polymerizes via a cationic mechanism. For example, a cationically curable/polymerizable functional group may comprise a heterocyclic group or a carbon-carbon double bond substituted with an electron-donating group.

The term "cationically curable resin" or "cationically polymerizable resin" refers to a mixture of organic compounds/monomers, at least some of which form polymers in the presence of a cationic initiator.

The term "curable composition" refers to a composition that changes properties based on a stimulus. Generally, curable compositions as described herein cure through polymerization and/or crosslinking. Generally, those curable compositions cure upon the addition of energy to the system, that energy may come in the form of actinic light, heat, or both. Generally, when compounds in the curable composition contain carbon-carbon double bonds, polymerization (curing) involves the reaction of such carbon-carbon double bonds.

The term "epoxide" refers to a compound, such as a monomer, comprising one or more epoxy groups.

The term "photoinitiator," refers to any type of substance that, upon exposure to radiation (e.g., actinic radiation), forms species that initiate the reaction and curing of polymerizing organic substances in a curable composition. Generally, when compounds present in the reactive components contain carbon-carbon double bonds, such polymerization (curing) involves reaction of such carbon-carbon double bonds.

The term "free radical photoinitiator" refers to a compound that undergoes a photoreaction on absorption of light, producing reactive free radical species. The reactive species that are generated then initiate curing (polymerization) of the reactive components of the curable composition.

The term "free radical polymerizable resin" refers to a resin capable of polymerizing when exposed to free radicals.

The term "(meth)acrylate group" refers to an acrylate group or a methacrylate group. An acrylate group corresponds to a group of the formula -O-C(=O)-CH=CH₂. A methacrylate group corresponds to a group of the formula -O-C(=O)-C(CH₃)=CH₂.

The term "monofunctional" refers to a compound having a single functional group. For example, a monofunctional (meth)acrylate monomer is a monomer having a single (meth)acrylate group.

The term "monomer" refers to a molecule with one or more polymerizable functional groups. The monomer has a single molecular weight, typically below 1000 g/mol, preferably 100 to 950 g/mol. As is generally recognized in the field, commercial products of a particular monomer may contain impurities or other chemical species.

The term "number-average molecular weight" or "Mₙ" refers to the statistical average molecular weight of the polymer chains in a sample or grouping. Number-average molecular weights reported herein are determined using a size exclusion chromatography (SEC) unless expressly noted otherwise.

The term "oligomer" refers to molecules with a distribution of molecular weights and may or may not have one or more polymerizable functional groups. An oligomer may be the reaction product of two or more monomers and typically has a number averaged molecular weight greater than or equal to 500 g/mol, preferably 500 g/mol to 30,000 g/mol, more preferably 1,000 g/mol to 8,000 g/mol. An oligomer may not always have a single molecular weight.

The term "cycloalkyl" means an optionally substituted monovalent hydrocarbon group comprising a non-aromatic ring. The cycloalkyl may contain a single non-aromatic ring or more than one non-aromatic ring. When the cycloalkyl comprises more than one more ring, the rings may be fused, bridged, or linked via a covalent bond. Examples of cycloalkyl groups include cyclopentyl, cyclohexyl, isobornyl, dicyclopentanyl, tricyclodecane, adamantanyl, any of which may be optionally substituted.

The term "heterocycloalkyl" means an optionally substituted cycloalkyl wherein one or more of the ring atoms are independently replaced by a heteroatom selected from O, N, or S. Examples of heterocycloalkyls include tetrahydrofuran, 1,3-dioxolane, tetrahydropyrane, 1,3-dioxane.

The term "aryl" means an optionally substituted monovalent aromatic group. The aryl may contain a single aromatic ring (i.e. phenyl) or more than one ring wherein at least one ring is aromatic. When the aryl comprises more than one more ring, the rings may be fused or linked via a covalent bond (for example biphenyl). Each aromatic ring may optionally comprise one to two additional fused rings (i.e. cycloalkyl, heterocycloalkyl or heteroaryl). Examples of aryls include phenyl, naphthyl, tetrahydronaphthyl, biphenyl, phenanthrenyl, naphthacenyl, fluorenyl, tetrahydrofluorenyl, indacenyl, hexahydroindacenyl, indenyl, dihydroindenyl, anthracenyl, and octahydroanthracenyl. The term "(C₆-C₄₀) aryl" means an aryl having 6 to 40 carbon atoms, of which 6 to 14 of the carbon atoms are aromatic ring carbon atoms.

The term "heteroaryl" means an optionally substituted aryl wherein one or more of the ring atoms are independently replaced by a heteroatom selected from O, N or S.

The term "optionally substituted group" means that one or more hydrogen atoms of the group may independently be replaced by a substituent selected from alkyl, cycloalkyl, aryl, heteroaryl, alkoxy, alkylaryl, haloalkyl, hydroxy, halogen, isocyanate, nitrile, amine, oxo (=O), carboxylic acid,-C(=O)-R', -C(=O)-OR', -C(=O)NH-R', -NH-C(=O)R', -O-C(=O)-NH-R', -NH-C(=O)-O-R', -C(=O)-O-C(=O)-R' and -SO2-NH-R', each R' being independently an optionally substituted group selected from alkyl, aryl, and alkylaryl.

The term "wt%" means weight percentage. Unless otherwise mentioned, the weight percentages of a compound or component of a composition are expressed relative to the weight of the composition.

### Isocyanurates Having (Meth)acrylate Group(s)

The curable composition comprises at least one isocyanurate-containing monomer having at least one (meth)acrylate group. In an exemplary embodiment, the isocyanurate-containing monomer has one, two or three (meth)acrylate groups, such as, but not limited to, mono-, di- and tri-(2-hydroxyethyl) (meth)acrylate substituted isocyanurates and alkoxylated derivatives thereof (such as methoxylated, propoxylated, etc.). Tris-(2-hydroxyethyl) isocyanurate trimethacrylate (such as SR368 by Sartomer) and tris-(2-hydroxyethyl) isocyanurate triacrylate are shown below as exemplary embodiments Structure 1 and Structure 2, respectively.

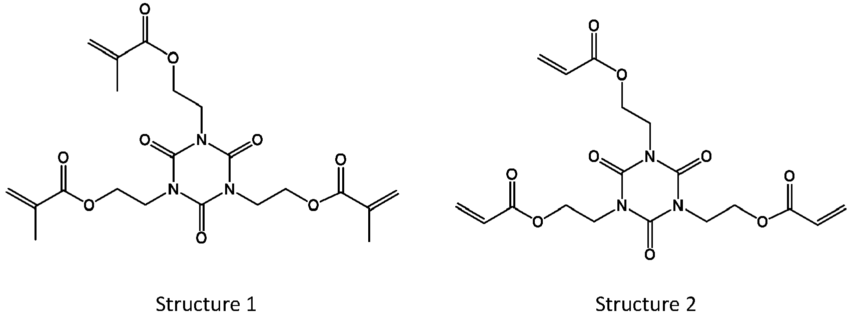

In an exemplary embodiment, the isocyanurate-containing monomer has one (meth)acrylate group (i.e., a mono-substituted isocyanurate).

In an exemplary embodiment, the isocyanurate-containing monomer has two (meth)acrylate groups (i.e., a di-substituted isocyanurate).

In an exemplary embodiment, the isocyanurate-containing monomer has three (meth)acrylate groups (i.e., a tri-substituted isocyanurate).

In an exemplary embodiment, the curable composition comprises at least 25 wt%, based on the total weight of the polymerizable components, of at least one isocyanurate-containing monomer having at least one (meth)acrylate group, such as at least 35 wt%, such as at least 45 wt%, such as at least 55 wt%, such as at least 65 wt%, such as at least 75 wt%, such as at least 85 wt%, such as at least 90 wt%, such as 25 wt% to 90 wt%, such as 25 wt% to 80 wt%, such as 25 wt% to 75 wt%, such as 25 wt% to 70 wt%, such as 30 wt% to 90 wt%, such as 30 wt% to 80 wt%, such as 30 wt% to 70 wt%.

### Other Isocyanurate-Containing Monomers

The curable composition may also comprise at least one non-acrylic isocyanurate-containing monomer.

In an exemplary embodiment, the at least one non-acrylic isocyanurate-containing monomer is an isocyanurate having at least one thiol group or at least one allyl group.

In an exemplary embodiment, the non-acrylic isocyanurate-containing monomer is an isocyanurate having one thiol group (i.e., a mono-substituted isocyanurate).

In an exemplary embodiment, the non-acrylic isocyanurate-containing monomer is an isocyanurate having two thiol groups (i.e., a di-substituted isocyanurate).

In an exemplary embodiment, the non-acrylic isocyanurate-containing monomer is an isocyanurate having three thiol groups (i.e., a tri-substituted isocyanurate).

In an exemplary embodiment, the non-acrylic isocyanurate-containing monomer is an isocyanurate having one allyl group (i.e., a mono-substituted isocyanurate).

In an exemplary embodiment, the non-acrylic isocyanurate-containing monomer is an isocyanurate having two allyl groups (i.e., a di-substituted isocyanurate).

In an exemplary embodiment, the non-acrylic isocyanurate-containing monomer is an isocyanurate having three allyl groups (i.e., a tri-substituted isocyanurate).

In an exemplary embodiment, a non-acrylic isocyanurate having at least one thiol group and a non-acrylic isocyanurate having at least one allyl group are present in the curable composition.

Tris-[2-(3-mercaptopropionyloxy)ethyl] isocyanurate (such as TEMPIC by Bruno Bock) and triallyl isocyanurate (such as SR533 by Sartomer) are shown below as exemplary embodiments of the non-acrylic isocyanurate-containing monomer as Structure 3 and Structure 4, respectively.

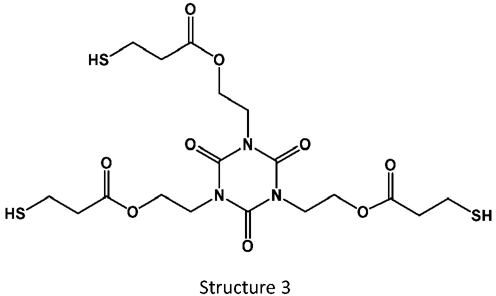

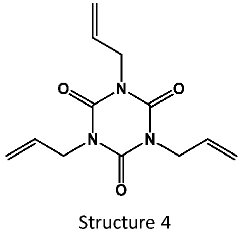

In an exemplary embodiment, the curable composition comprises from 1 wt% to 75 wt%, based on the total weight of the polymerizable components, of the non-acrylic isocyanurate-containing monomer, such as from 1 wt% to 65 wt%, such as from 1 wt% to 55 wt%, such as from 1 wt% to 45 wt%, such as from 3 wt% to 75 wt%, such as from 3 wt% to 65 wt%, such as from 3 wt% to 55 wt%, such as from 3 wt% to 45 wt%, such as from 5 wt% to 75 wt%, such as from 5 wt% to 65 wt%, such as from 5 wt% to 55 wt%, such as from 5 wt% to 45 wt%, such as from 5 wt% to 40 wt%, such as from 5 wt% to 30 wt%, such as from 10 wt% to 75 wt%, such as from 10 wt% to 65 wt%, such as from 10 wt% to 55 wt%, such as from 10 wt% to 45 wt%, such as from 10 wt% to 40 wt%, such as from 15 wt% to 75 wt%, such as from 15 wt% to 65 wt%, such as from 15 wt% to 55 wt%, such as from 15 wt% to 45 wt%, such as from 15 wt% to 40 wt%.

### Phosphorus-Containing Filler

The curable composition comprises at least one non-reactive (i.e., does not participate in a polymerization reaction under curing conditions) phosphorus-containing filler, where the filler is in a solid form at room temperature (25 °C) and contains at least 10 wt% of phosphorus.

In an exemplary embodiment, the phosphorus-containing filler is in particulate form.

In an exemplary embodiment, the phosphorus-containing filler is substantially insoluble in water.

In an exemplary embodiment, the phosphorus-containing filler is a phosphinate filler.

In an exemplary embodiment, the phosphorus-containing filler is a phosphonate filler.

In an exemplary embodiment, the phosphorus-containing filler is a phosphate filler, such as an inorganic phosphate filler.

In an exemplary embodiment, the phosphorus-containing filler includes, but is not limited to, ammonium polyphosphate (such as AP423), aluminum diethyl phosphinate (such as OP945 by Clariant), red phosphorous, melamine phosphates, phosphoric acid salts, or trialkyl phosphates.

In an exemplary embodiment, the cured composition has a UL-94 rating of V-2 or better, such as V-1 or better, such as V-0.

In an exemplary embodiment, the curable composition comprises at least 5 wt%, based on the total weight of the polymerizable components, of at least one non-reactive phosphorus-containing filler containing at least 10 wt% of phosphorus, such as at least 12 wt%, such as at least 15 wt%, such as at least 20 wt%, such as at least 25 wt%, such as at least 35 wt%, such as at least 45 wt%, such as at least 55 wt%, such as at least 65 wt%, such as at least 75 wt%, such as 5 wt% to 75 wt%, such as 5 wt% to 65 wt%, such as 5 wt% to 55 wt%, such as 5 wt% to 45 wt%, such as 5 wt% to 35 wt%, such as 5 wt% to 25 wt%, such as 5 wt% to 20 wt%, such as 5 wt% to 15 wt%, such as 10 wt% to 75 wt%, such as 10 wt% to 65 wt%, such as 10 wt% to 55 wt%, such as 10 wt% to 45 wt%, such as 10 wt% to 35 wt%, such as 10 wt% to 25 wt%, such as 10 wt% to 20 wt%, such as 15 wt% to 75 wt%, such as 15 wt% to 65 wt%, such as 15 wt% to 55 wt%, such as 15 wt% to 45 wt%, such as 15 wt% to 35 wt%, such as 15 wt% to 25 wt%, such as 20 wt% to 75 wt%, such as 20 wt% to 65 wt%, such as 20 wt% to 55 wt%, such as 20vwt% to 45 wt%, such as 20 wt% to 35 wt%, such as 30 wt% to 75 wt%, such as 30 wt% to 65 wt%, such as 30 wt% to 55 wt%, such as 40 wt% to 75 wt%, such as 40 wt% to 65 wt%, such as 50 wt% to 75 wt%.

In an exemplary embodiment, the phosphorus-containing filler contains at least 10 wt% of phosphorus, such as at least 15 wt% of phosphorus, such as at least 20 wt% of phosphorus, such as at least 25 wt% of phosphorus, such as at least 35 wt% of phosphorus, such as at least 45 wt% of phosphorus, such as at least 55 wt% of phosphorus, such as at least 65 wt% of phosphorus, such as at least 75 wt% of phosphorus, such as at least 85 wt% of phosphorus, such as at least 95 wt% of phosphorus, such as 10 wt% to 100 wt% of phosphorus, such as 10 wt% to 90 wt% of phosphorus, such as 10 wt% to 80 wt% of phosphorus, such as 10 wt% to 70 wt% of phosphorus, such as 10 wt% to 60 wt% of phosphorus, such as 10 wt% to 50 wt% of phosphorus, such as 10 wt% to 40 wt% of phosphorus, such as 10 wt% to 30 wt% of phosphorus, such as 10 wt% to 20 wt% of phosphorus, such as 20 wt% to 100 wt% of phosphorus, such as 20 wt% to 90 wt% of phosphorus, such as 20 wt% to 80 wt% of phosphorus, such as 20 wt% to 70 wt% of phosphorus, such as 20 wt% to 60 wt% of phosphorus, such as 20 wt% to 50 wt% of phosphorus, such as 20 wt% to 40 wt% of phosphorus, such as 30 wt% to 100 wt% of phosphorus, such as 30 wt% to 90 wt% of phosphorus, such as 30 wt% to 80 wt% of phosphorus, such as 30 wt% to 70 wt% of phosphorus, such as 30 wt% to 60 wt% of phosphorus, such as 30 wt% to 50 wt% of phosphorus, such as 40 wt% to 100 wt% of phosphorus, such as 40 wt% to 80 wt% of phosphorus, such as 50 wt% to 100 wt% of phosphorus.

It was observed that there is an inverse relationship between the amount of the at least one isocyanurate-containing monomer having at least one (meth)acrylate group and the amount of the at least one non-reactive phosphorus-containing filler present in the curable composition. Thus, as the amount of the isocyanurate-containing monomer having at least one (meth)acrylate group increases, the amount of the phosphorus-containing filler can decrease with no observed decrease in the flame retardancy properties of the composition. Alternatively, as the amount of the phosphorus-containing filler increases, the amount of the isocyanurate-containing monomer having at least one (meth)acrylate group can decrease with no observed decrease in the flame retardancy properties of the composition. Increases in amounts of both the isocyanurate-containing monomer having at least one (meth)acrylate group and the phosphorus-containing filler allows for improved flame retardancy in increasingly thinner objects (e.g., an object 5 inches long and 0.5 inches wide and having different thicknesses).

### Free Radical Photoinitiator

The curable composition comprises at least one free radical photoinitiator. The free radical photoinitiator is operable to cure the free radical polymerizable resin. Generally, free radical photoinitiators can adopt two different modes of action and are classified by mode of action as Norrish Type I and Norrish Type II photo-initiators. In some embodiments, the free radical photoinitiator comprises a Norrish Type I photo-initiator, a Norrish Type II photo-initiator, or both.

As used herein, the term "activity" with reference to Norrish Type I and Norrish Type II activity is intended to relate to Norrish photoinitiation and analogous reactions. For instance, a photoinitiator having Norrish Type I activity would be a photoinitiator characterized by a cleavage reaction into radical fragments of the original photoinitiator on exposure to actinic radiation within a selected wavelength range. For an initiator having Norrish Type II activity, exposure to actinic radiation within a selected wavelength range causes the formation of a radical species which can abstract a hydrogen to create a second radical species which can initiate a photo polymerization. The Norrish Type I and Norrish Type II mechanisms are known to the person of ordinary skill in the art.

Classes of suitable free radical photoinitiators suitable for use in the curable compositions as described herein include, but are not limited to, benzoins, benzoin ethers, acetophenones, α-hydroxy acetophenones, benzyl ketals, anthraquinones, phosphine oxides, acylphosphine oxides, α-hydroxyketones, phenylglyoxylates, α-aminoketones, benzophenones, thioxanthones, xanthones, acridine derivatives, phenazene derivatives, quinoxaline derivatives, triazines, benzoyl formates, aromatic oximes, metallocenes, acylsilyl or acylgermanyl compounds, camphorquinones, polymeric derivatives thereof, and mixtures thereof.

Examples of suitable free radical photoinitiators include, but are not limited to, 2-methylanthraquinone, 2-ethylanthraquinone, 2-chloroanthraquinone, 2-benzyanthraquinone, 2-tert-butylanthraquinone, 1,2-benzo-9,10-anthraquinone, benzoin methyl ether, benzoin ethyl ether, benzoin isopropyl ether, alpha-methylbenzoin, alpha-phenylbenzoin, Michler's ketone, 2,2-dialkoxybenzophenones, 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, α-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1-[4-(methylthio) phenyl]-2-morpholinopropanone-1, 2-hydroxy-2-methyl-1-phenyl-propanone, oligomeric α-hydroxy ketones, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid, (benzene) tricarbonylchromium, benzil, benzoin isobutyl ether, benzophenone/1-hydroxycyclohexyl phenyl ketone (50/50 blend), 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one and combinations thereof.

Preferred free radical photoinitiators include a benzophenone (such as those available from Sartomer under the trademarks Speedcure^{™} BP, Speedcure^{™} 7005, and Speedcure^{™} 7006), a thioxanthone (such as available from Sartomer under the trademarks Speedcure^{™} 7010 and Speedcure^{™} ITX), an α-hydroxy acetophenone, an acylphosphine oxide (such as available from Sartomer under the trademarks Speedcure^{™} BPO, Speedcure^{™} TPO and Speedcure^{™} TPO-L) and combinations thereof.

In an exemplary embodiment, the free radical photoinitiator is an acylphosphine oxide. As used herein, the term "phosphine oxide" refers to a compound comprising a -P(=O)- group. The acylphosphine oxide may have Structure 5

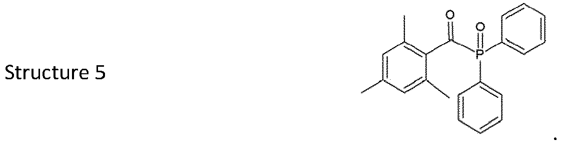

In an exemplary embodiment, the free radical photoinitiator is a phenylpropanone, such as a phenylpropanone with Structure 6

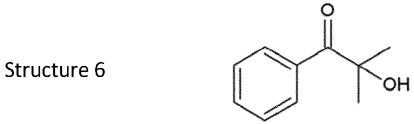

In an exemplary embodiment, the free radical photoinitiator is a blend of an acylphosphine oxide and a phenylpropanone.

### Wetting Agent

In an exemplary embodiment, the curable composition further comprises at least one wetting agent (dispersant). Suitable wetting agents include cationic, anionic, and nonionic wetting agent, as well as amphoteric wetting agents and zwitterionic wetting agents.

In an exemplary embodiment, suitable wetting agents include, but are not limited to, anionic phosphate wetting agents, anionic sulfate wetting agents, anionic sulfonic wetting agents, anionic carboxylic acid wetting agents, nonionic alkoxylated wetting agents, amino acid based wetting agents, cationic amine wetting agents, cationic quaternary amine wetting agents. In another exemplary embodiment, suitable wetting agents include, but are not limited to, sodium lauryl sulfate, quaternary ammonium compounds (such as hexadecyltrimethyl ammonium chloride), aromatic compounds having a hydrophilic polyethylene oxide chain and a hydrocarbon lipophilic or hydrophobic group (such as Triton X-100), nonylphenol polyglycol ethers, a sodium salt of a naphthalenesulfonic acid-formaldehyde condensation product and combinations thereof.

In an exemplary embodiment, the curable composition comprises at least 0.1 wt%, based on the total weight of the polymerizable components, of the wetting agent, such as at least 0.5 wt%, such as at least 1 wt%, such as at least 3 wt%, such as at least 5 wt%, such as at least 10 wt%, such as 0.1 wt% to 10 wt%, such as 0.1 wt% to 5 wt%, such as 0.1 wt% to 3 wt%, such as 0.1 wt% to 1 wt%, such as 0.5 wt% to 10 wt%, such as 0.5 wt% to 5 wt%, such as 0.5 wt% to 3 wt%, such as 1 wt% to 10 wt%, such as 1 wt% to 5 wt%, such as 3 wt% to 10 wt%, such as 5 wt% to 10 wt%.

### Additional Agents

In an exemplary embodiment, the curable composition further comprises at least one ethylenically unsaturated, non-isocyanurate containing monomer, epoxide-containing monomer, oxetane-containing monomer, and oligomers thereof.

In an exemplary embodiment, the curable composition comprises from 1 wt% to 75 wt%, based on the total weight of the polymerizable components, of one or more ethylenically unsaturated, non-isocyanurate containing monomers and/or epoxide-containing monomers and/or oxetane-containing monomers, and/or oligomers thereof, such as from 1 wt% to 65 wt%, such as from 1 wt% to 55 wt%, such as from 1 wt% to 45 wt%, such as from 1 wt% to 35 wt%, such as from 1 wt% to 25 wt%, such as from 1 wt% to 15 wt%, such as from 5 wt% to 75 wt%, such as from 5 wt% to 65 wt%, such as from 5 wt% to 55 wt%, such as from 5 wt% to 45 wt%, such as from 5 wt% to 35 wt%, such as from 5 wt% to 25 wt%, such as from 5 wt% to 15 wt%, such as from 10 wt% to 75 wt%, such as from 10 wt% to 65 wt%, such as from 10 wt% to 55 wt%, such as from 10 wt% to 45 wt%, such as from 10 wt% to 35 wt%, such as from 10 wt% to 25 wt%, such as from 15 wt% to 75 wt%, such as from 15 wt% to 65 wt%, such as from 15 wt% to 55 wt%, such as from 15 wt% to 45 wt%, such as from 15 wt% to 35 wt%, such as from 20 wt% to 75 wt%, such as from 20 wt% to 65 wt%, such as from 20 wt% to 55 wt%, such as from 30 wt% to 75 wt%, such as from 30 wt% to 65 wt%.

In an exemplary embodiment, the one or more ethylenically unsaturated, non-isocyanurate containing monomers include, but are not limited to, at least one (meth)acrylate monomer, at least one (meth)acrylate oligomer, or both, where the (meth)acrylate monomer may be monofunctional (e.g., comprising a single (meth)acrylate group) or multifunctional (e.g., comprising more than one (meth)acrylate group), which includes difunctional, trifunctional, and higher functionality or a combination thereof, and the at least one (meth)acrylate oligomer may be multifunctional, which includes difunctional and trifunctional and higher functionality. As is well-known, (meth)acrylate oligomers may have an average functionality which is not an integer (e.g., an average functionality between 1.9 and 2.1), and such (meth)acrylate oligomers are suitable for use herein.

Classes of (meth)acrylate oligomers are diverse and well known by those skilled in the art and include urethane (meth)acrylates, (meth)acrylated epoxies ("epoxy (meth)acrylates"), (meth)acrylated polyesters, and (meth)acrylated siloxanes.

In addition to the (meth)acrylate group, the at least one (meth)acrylate oligomer may comprise urethane linkages. The at least one (meth)acrylate oligomer may be an aliphatic urethane (meth)acrylate oligomer. One suitable (meth)acrylate oligomer is available from Sartomer under the designation CN9018.

Classes of (meth)acrylate monomers are diverse and well known by those skilled in the art. A wide range of (meth)acrylate monomers may be used herein.

Examples of suitable monofunctional (meth)acrylate monomers include, but are not limited to, (meth)acrylate esters of aliphatic alcohols (wherein the aliphatic alcohol may be straight chain, branched or alicyclic and may be a mono-alcohol or a polyalcohol (e.g., a di-alcohol), provided only one hydroxyl group is esterified with (meth)acrylic acid); (meth)acrylate esters of aromatic alcohols (such as phenols, including alkylated phenols); (meth)acrylate esters of alkylaryl alcohols (such as benzyl alcohol); (meth)acrylate esters of oligomeric and polymeric glycols such as diethylene glycol, triethylene glycol, dipropylene glycol, tripropylene glycol, polyethylene glycol, and polypropylene glycol); (meth)acrylate esters of monoalkyl ethers of glycols and oligoglycols; (meth)acrylate esters of alkoxylated (e.g., ethoxylated and/or propoxylated) aliphatic alcohols (wherein the aliphatic alcohol may be straight chain, branched or alicyclic and may be a mono-alcohol or a polyalcohol (e.g., a di-alcohol), provided only one hydroxyl group of the alkoxylated aliphatic alcohol is esterified with (meth)acrylic acid); (meth)acrylate esters of alkoxylated (e.g., ethoxylated and/or propoxylated) aromatic alcohols (such as alkoxylated phenols); caprolactone mono(meth)acrylates; and the like.

The following compounds are specific examples of suitable monofunctional (meth)acrylate monomers: methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; alkoxylated phenol (meth)acrylates; alkoxylated nonylphenol (meth)acrylates; cyclic trimethylolpropane formal (meth)acrylate; isobornyl (meth)acrylate; tricyclodecanemethanol (meth)acrylate; tert-butylcyclohexanol (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; and combinations thereof.

Examples of other suitable monofunctional (meth)acrylate monomers include, for example, caprolactone (meth)acrylate, 2-(2-ethoxyethoxy)ethyl (meth)acrylate, 2-phenoxyethyl (meth)acrylate, isooctyl (meth)acrylate, 2-octyl (meth)acrylate, 2-ethylhexyl (meth)acrylate, isodecyl (meth)acrylate, ethoxyethoxyethyl (meth)acrylate, neopentyl glycol (meth)acrylates and alkoxylated analogues thereof, as well as caprolactone-based (meth)acrylates prepared by addition of one, two, three or more moles of caprolactone to a hydroxyalkyl (meth)acrylate such as hydroxyethyl (meth)acrylate ("caprolactone adducts of hydroxyalkyl (meth)acrylates") and combinations thereof.

As described herein, the (meth)acrylate monomer may be multifunctional. A multifunctional (meth)acrylate monomer may have from 2 to 6 (meth)acrylate groups, in particular 2 or 3 (meth)acrylate groups. Examples of suitable multifunctional (meth)acrylate monomers include bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth)acrylate; dipropylene glycol di(meth)acrylate; tripropylene glycol di(meth)acrylate; tetrapropylene glycol di(meth)acrylate; polypropylene glycol di(meth)acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth)acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; neopentylglycol hydroxypivalate diacrylate; 2-methyl-2,4-pentanediol di(meth)acrylate; polybutadiene di(meth)acrylate; cyclohexane-1,4-dimethanol di(meth)acrylate; tricyclodecane dimethanol di(meth)acrylate; metallic di(meth)acrylates; modified metallic di(meth)acrylates; glyceryl di(meth)acrylate; glyceryl tri(meth)acrylate; trimethylolethane tri(meth)acrylate; trimethylolethane di(meth)acrylate; trimethylolpropane tri(meth)acrylate; trimethylolpropane di(meth)acrylate; pentaerythritol di(meth)acrylate; pentaerythritol tri(meth)acrylate; pentaerythritol tetra(meth)acrylate; di(trimethylolpropane) diacrylate; difunctional esterdiol diacrylates; di(trimethylolpropane) triacrylate; di(trimethylolpropane) tetraacrylate, sorbitol penta(meth)acrylate; di(pentaerythritol) tetraacrylate; di(pentaerythritol) pentaacrylate; di(pentaerythritol) hexa(meth)acrylate; tris (2-hydroxyethyl) isocyanurate tri(meth)acrylate; as well as the alkoxylated (e.g., ethoxylated and/or propoxylated) derivatives thereof; and combinations thereof.

In an exemplary embodiment, the curable composition comprises a cationically curable monomer alone or in as a component of a resin. In a cationic polymerization mechanism, a cationic initiator accepts charge from the cationically curable compound, which then becomes reactive and leads to chain growth by reaction with another cationically curable compound.

In an exemplary embodiment, the curable composition comprises from 1 wt% to 75 wt%, based on the total weight of the polymerizable components, of the cationically curable compound or resin, such as from 1 wt% to 65 wt%, such as from 1 wt% to 55 wt%, such as from 1 wt% to 45 wt%, such as from 1 wt% to 35 wt%, such as from 1 wt% to 25 wt%, such as from 1 wt% to 15 wt%, such as from 5 wt% to 75 wt%, such as from 5 wt% to 65 wt%, such as from 5 wt% to 55 wt%, such as from 5 wt% to 45 wt%, such as from 5 wt% to 35 wt%, such as from 5 wt% to 25 wt%, such as from 5 wt% to 15 wt%, such as from 10 wt% to 75 wt%, such as from 10 wt% to 65 wt%, such as from 10 wt% to 55 wt%, such as from 10 wt% to 45 wt%, such as from 10 wt% to 35 wt%, such as from 10 wt% to 25 wt%, such as from 15 wt% to 75 wt%, such as from 15 wt% to 65 wt%, such as from 15 wt% to 55 wt%, such as from 15 wt% to 45 wt%, such as from 15 wt% to 35 wt%, such as from 20 wt% to 75 wt%, such as from 20 wt% to 65 wt%, such as from 20 wt% to 55 wt%, such as from 30 wt% to 75 wt%, such as from 30 wt% to 65 wt%.

The cationically curable monomer may be selected from epoxides, oxetanes, vinyl ethers, vinyl amides, oxolanes, cyclic acetals, cyclic lactones, thiiranes, thiethanes, spiro-orthoesters, ethylenically unsaturated compounds other than (meth)acrylates, derivatives thereof and mixtures thereof.

The epoxides may comprise aromatic epoxides, cycloaliphatic epoxides, oxetanes and mixtures thereof. Suitable epoxy-functionalized compounds capable of being cationically polymerized include glycidyl ethers, in particular mono-, di-, tri- and polyglycidyl ether compounds, and alicyclic ether compounds including those comprising residues of carboxylic acids such as, for example, alkylcarboxylic acid residual groups, alkylcycloalkylcarboxylic acid residual groups and dialkyl dicarboxylic acid residual groups. For example, the epoxy-functionalized compounds may be bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4- epoxycyclohexylmethyl-3',4'-epoxycyclohexanecarboxylate, 2-(3,4-epoxycyclohexyl-5,5-spiro-3,4- epoxy)cyclohexane-1,4-dioxane, bis(3,4-epoxycyclohexylmethyl)adipate, vinylcyclohexene oxide, limonene dioxide, bis(3,4-epoxy-6-methylcyclohexylmethyl)adipate, 3,4-epoxy-6- methylcyclohexyl-3',4'-epoxy-6'-methylcyclohexanecarboxylate, methylenebis(3, 4-epoxycyclohexane), dicyclopentadiene diepoxide, di(3,4-epoxycyclohexylmethyl) ether of ethylene glycol, ethylenebis(3, 4-epoxycyclohexanecarboxylate), epoxyhexahydrodioctylphthalate, epoxyhexahydro-di-2-ethylhexyl phthalate, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, polyglycidyl ethers of polyether polyol obtained by the addition of one or more alkylene oxides to aliphatic polyhydric alcohols such as ethylene glycol, propylene glycol, and glycerol, diglycidyl esters of aliphatic long-chain dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, epoxidized soybean oil, epoxybutylstearic acid, epoxyoctylstearic acid, epoxidized linseed oil, epoxidized polybutadiene, and the like.

The cationically curable resin may comprise an epoxide resin, preferably a multi-functional (preferably difunctional) epoxide resin.

The epoxide may comprise a cycloaliphatic epoxide. The cationically curable resin may comprise a difunctional epoxide monomer, such as a difunctional cycloaliphatic epoxide monomer. The difunctional cycloaliphatic epoxide monomer may have Structure 7.

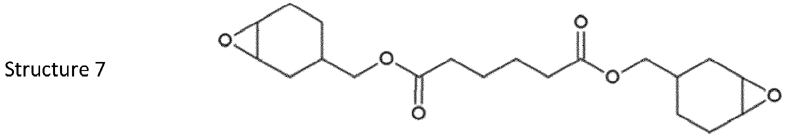

The cationically curable monomer may comprise at least 80 wt. %, such as at least 90 wt. %, at least 95 wt. %, at least 99 wt. %, or even at least 99.9 wt. % of epoxide resin on the basis of the total weight of the cationically curable resin. The cationically curable resin may comprise, consist essentially of, or consist of at least one epoxide monomer.

Suitable oxetane monomers capable of being cationically curable include trimethylene oxide, 3,3- dimethyloxetane, 3,3-dichloromethyloxetane, 3-ethyl-3-phenoxymethyloxetane, and bis(3-ethyl-3- methyloxy)butane, 3-ethyl-3-oxetanemethanol.

Suitable oxolanes capable of being cationically polymerized include tetrahydrofuran and 2,3-dimethyl tetrahydrofuran.

Suitable cyclic acetals capable of being cationically polymerized include trioxane, 1,3-dioxolane, and 1,3,6-trioxanecyclooctane.

Suitable cyclic lactones capable of being cationically polymerized include b-propiolactone and e- caprolactone.

Suitable thiiranes capable of being cationically polymerized include ethylene sulfide, 1,2-propylene sulfide, and thioepichlorohydrin.

Suitable thiethanes capable of being cationically polymerized include 3,3-dimethylthiethane.

Suitable spiro-orthoesters capable of being cationically polymerized are compounds obtained by the reaction of an epoxy compound and a lactone.

Additional suitable ethylenically unsaturated compounds capable of being cationically polymerized include vinyl ethers such as ethylene glycol divinyl ether, triethylene glycol divinyl ether and trimethylolpropane trivinyl ether; aliphatic vinyl monomers such as vinylcyclohexane; olefins such isobutylene; dienes such as butadiene; vinyl alkyl ethers; vinyl aromatic monomers such as styrene and alkylstyrenes; unsaturated polymers such as polybutadiene; derivatives of the above organic substances; and the like, at least some of which may also be polymerizable by free radical mechanisms.

In an exemplary embodiment, the curable composition further comprises one or more additives that include, but are not limited to, ultraviolet blockers, pigments, dyes, stabilizers, inhibitors, antioxidants, ultraviolet absorbers, photostabilizers, foam inhibitors (defoamers), flow or leveling agents, colorants, dispersants, diluents, slip additives, fillers other than the phosphorus-containing fillers described herein, thixotropic agents, matting agents, accelerators, adhesion promoters (such as acidic adhesion promoters), tackifiers, polymers other than those described herein, waxes or other various additives, including any of the additives conventionally utilized in the coating, sealant, adhesive, ink arts or flame retardant coatings.

In various embodiments, the curable composition may comprise from 0 wt% to 20 wt%, based on the total weight of the polymerizable components, of one or more of these additives, such as from 0.01 wt% to 20 wt%, such as from 0.01 wt% to 10 wt%, such as from 0.01 wt% to 5 wt%, such as from 0.01 wt% to 1 wt%, such as from 0.1 wt% to 20 wt%, such as from 0.1 wt% to 10 wt%, such as from 0.1 wt% to 5 wt%, such as from 0.1 wt% to 1 wt%, such as from 0.5 wt% to 20 wt%, such as from 0.5 wt% to 10 wt%, such as from 0.5 wt% to 5 wt%, such as from 0.5 wt% to 1 wt%.

### Preparation of the Composition

When the curable composition contains at least one cationically curable monomer (such as a component in a resin), a cationic photoinitiator is also present. Cationic photoinitiators are often salts, such as onium salts, such as iodonium, sulfonium, pyridinium, alkoxypyridinium, phosphonium, oxonium, or diazonium salts. In embodiments, the cationic photoinitiator may comprise sulfonium salts, iodonium salts, and/or other onium salts. In particular, the cationic photoinitiator may be an onium salt, such as a diaryliodonium salt and/or a triarylsulfonium salt. Included among such cationic photoinitiators are sulfonium salts. Included among sulfonium salts are aromatic sulfonium salts. Specific examples thereof include triphenylsulfonium salts, methyldiphenylsulfonium salts, dimethylphenylsulfonium salts, diphenylnaphthylsulfonium salts and di(methoxynaphthyl)methylsulfonium salts. Included among such aromatic sulfonium salts are aromatic sulfonium salts with hexafluorophosphate ions (PF6⁻) or hexafluoroantimonate ions (SbF6⁻) as counterions. Specific examples include triphenylsulfonium hexafluorophosphate, methyldiphenylsulfonium hexafluorophosphate, dimethylphenyl-sulfonium hexafluorophosphate, diphenylnaphthylsulfonium hexafluorophosphate, di(methoxynaphthyl)methyl-sulfonium hexafluoro-phosphate and triarylsulfonium hexafluoroantimonate (e.g., Speedcure 976).

The cationic photoinitiator may comprise a triarylsulfonium salt, such as (sulfanediyldibenzene-4,1-diyl)bis(diphenylsulfonium) bis(hexafluoroantimonate). The triarylsulfonium salt may comprise a compound of Structures 8, 9 or both. Suitable triarylsulfonium salt based cationic photoinitiators are available from Sartomer, under the trademark Speedcure^{™} 976.

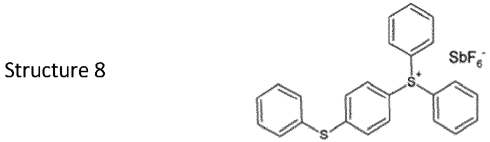

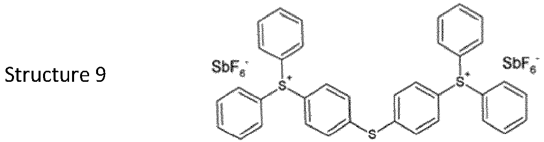

In embodiments, the cationic photoinitiator may comprise at least 80 wt%, such as at least 90 wt%, such as at least 95 wt. %, such as at least 99 wt. %, such as at least 99.9 wt. % of the onium salt, such as the sulfonium salt, on the basis of the total weight of the cationic photoinitiator. The cationic photoinitiator may comprise, consist of, or consist essentially of at least one onium salt.

The cationic photoinitiator may optionally be coupled to a photosensitizing compound. Without being limited by theory, certain radical photoinitiators, when excited with light, can function as reducing agents to interact with the cationic photoinitiator (such as an iodonium salt) in a redox reaction. The resulting oxidized radical photoinitiator is then a cation, which may initiate cationic polymerization directly or interact with other components in the formulation to produce active cations which can initiate cationic photopolymerization. In embodiments, the photosensitizing compound may be the free radical photoinitiator sensitive to actinic radiation. In embodiments, the free radical photoinitiator may be a Norrish type I photoinitiator. Examples of such Type I photoinitiators include but are not limited to Speedcure TPO, Speedcure BKL (Irgacure 651), and Speedcure BPO (BAPO). In other embodiments, the free radical photoinitiator may be selected from various Norrish Type II photoinitiators such as xanthone, thioxanthone, isopropylthioxanthone, chloropropoxythioxanthone, diethylthioxanthone, benzophenone, and acetophenone, or derivatives thereof, as long as said photosensitizer absorbs at the desired wavelength. In embodiments, the cationic photoinitiator may be an iodonium salt and the free radical photoinitiator may be selected from xanthone, thioxanthone, isopropylthioxanthone, chloropropoxythioxanthone, diethylthioxanthone, benzophenone, and acetophenone, acylphosphine oxide, or derivatives thereof.

Suitable iodonium salts may be selected from the group consisting of bis(4-dodecylphenyl)iodonium hexafluoroantimonate (Structure 10); bis-(4-t-butylphenyl)-iodonium hexafluorophosphate (Structure 11); and 4-isopropyl-4'-methyldiphenyliodonium tetrakis(pentafluorophenyl)borate (Structure 12). Suitable commercially available bis(4-dodecylphenyl)iodonium hexafluoroantimonate of Structure 10 are available from Sartomer under the trademark Speedcure^{™} 937. Suitable commercially available bis-(4-t-butylphenyl)-iodonium hexafluorophosphate of Structure 11 are available from Sartomer under the trademark Speedcure^{™} 938. Suitable commercially available 4-isopropyl-4'-methyldiphenyliodonium tetrakis(pentafluorophenyl)borate of Structure 12 are available from Sartomer under the trademark Speedcure^{™} 939.

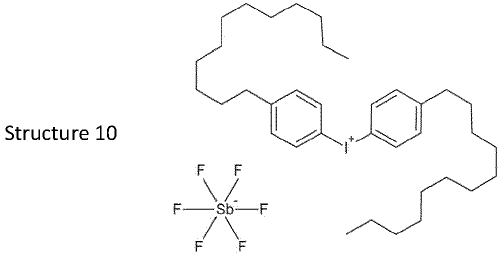

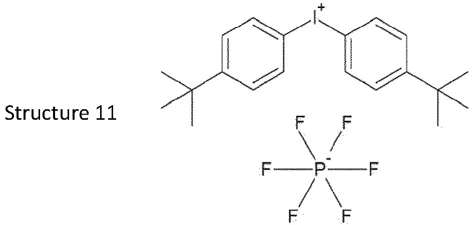

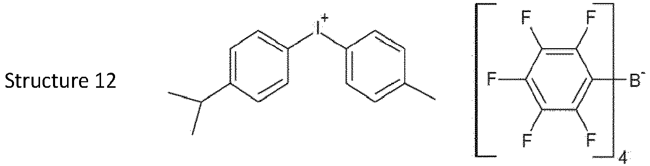

The actinic radiation may comprise ultra-violet (UV) light, such as light in the UVB and UVC ranges, such as light with a wavelength of from 180 nm to 400 nm, such as from 200 nm to 400 nm or from 200 nm to 320 nm. In embodiments, the actinic radiation range may be produced by a mercury bulb, such as an H-bulb.

The curable composition is substantially free of any halogen atoms and thus contains less than 2 wt%, such as less than 1 wt%, such as less than 0.5 wt%, such as less than 0.2 wt% such as 0 to 2 wt%, such as 0 to 1 wt%, such as 0 to 0.5 wt%, such as 0 wt%, of halogen atoms, relative to the total weight of the polymerizable components.

In an exemplary embodiment, the curable composition is a liquid dispersion at room temperature.

In an exemplary embodiment, the curable composition contains less than 5 wt% of a reactive flame retardant, such as less than 3 wt%, such as less than 1 wt%, such as less than 0.3 wt%, such as 0 to less than 5 wt%, such as 0 to 3 wt%, such as 0 to 1 wt%, such as 0 wt% of a reactive flame retardant, relative to the total weight of the polymerizable components. As clarification, the term "reactive flame retardant" as used herein excludes the isocyanurates described herein.

In an exemplary embodiment, the curable composition contains less than 5 wt% of polyamide-forming monomers, such as less than 3 wt%, such as less than 1 wt%, such as less than 0.3 wt%, such as 0 to less than 5 wt%, such as 0 to 3 wt%, such as 0 to 1 wt%, such as 0 wt%, of polyamide-forming monomers, relative to the total weight of the polymerizable components.

The present disclosure includes an actinically-cured composition comprising the product resulting from actinically curing the curable compositions as described herein. The curable compositions may be cured by exposing the curable compositions to actinic radiation, and optionally heat.

### Uses

The curable compositions as described herein may be used in moldings and coatings.

The curable compositions as described herein may also be 3D-printing compositions and may be used in a 3D printing process.

The curable compositions may be partially cured during the 3D printing process to form a green composition. As described below, the green composition may then be post-cured to form a post-cured composition. It should be understood that the cured composition may include both the green composition and the post-cured composition. Accordingly, the curable compositions may be used to construct a 3D printed article which may comprise the curable compositions, the green composition, the post-cured compositions, or a combination of these.

The process for the preparation of a 3D printed article may comprise curing the actinically-curable compositions. In particular, the curable compositions may be cured by exposing the curable compositions to actinic radiation. Specifically, the actinic radiation may include UV, near-UV, visible, infrared and/or near-infrared radiation, or electron beam radiation.

The 3D printed article may be obtained with a process for the preparation of a 3D printed article that comprises printing a 3D printed article with the curable compositions as described herein. In particular, the process may comprise printing a 3D printed article layer by layer or continuously.

A plurality of layers of a curable composition as described herein may be applied to a substrate surface; the plurality of layers may be simultaneously cured (by exposure to a single dose of radiation, for example) or each layer may be successively cured before application of an additional layer of the curable composition. In some embodiments, each layer may be successively cured before the application of an additional layer, then the plurality of layers may be simultaneously cured.

The curable compositions which are described herein can be used as resins in three-dimensional printing applications. Three-dimensional (3D) printing (also referred to as additive manufacturing) is a process in which a 3D digital model is manufactured by the accretion of construction material. The 3D printed object is created by utilizing the computer-aided design (CAD) data of an object through sequential construction of two dimensional (2D) layers or slices that correspond to cross-sections of 3D objects. Stereolithography (SL) is one type of additive manufacturing where a liquid resin is hardened by selective exposure to a radiation to form each 2D layer. The radiation can be in the form of electromagnetic waves or an electron beam. The most commonly applied energy source is ultraviolet, visible or infrared radiation.

Suitable 3D printing processes may include digital light printing (DLP), stereolithography (SLA), inkjet, multi-jet printing, piezoelectric printing, actinically-cured extrusion, liquid crystal display (LCD) printing, and gel deposition printing, and hybrids of any of these.

Sterolithography and other actinically-curable 3D printing methods typically apply low intensity light sources to radiate each layer of a curable composition to form the desired article comprising the green composition. As a result, actinically-curable composition polymerization kinetics, the green strength, and homopolymer volumetric shrinkage upon cure of the curable composition article are important criteria to determine if a particular curable composition will sufficiently polymerize (cure) when irradiated and have sufficient print fidelity for its intended purpose.

The desired article comprising the green composition may then be exposed to an additional dose of actinic radiation in a process known as post-curing. Post-curing the article comprising the green composition may produce an article which comprises the post-cured composition.

The curable compositions as described herein are especially useful as 3D printing resin formulations, that is, compositions intended for use in manufacturing three-dimensional articles using 3D printing techniques. Such three-dimensional articles may be free-standing/self-supporting and may comprise, consist essentially of, or consist of a composition as described herein, whether the curable composition has been cured or not. The three-dimensional article may also be a composite, comprising at least one component consisting essentially of or consisting of a cured composition as previously mentioned as well as at least one additional component comprised of one or more materials other than such a cured composition (for example, a metal component or a thermoplastic component or inorganic filler or fibrous reinforcement). The curable compositions as described herein may be used in a three-dimensional printing operation together with another material which functions as a scaffold or support for the article formed from the curable compositions as described herein.

Thus, the curable compositions as described herein are useful in the practice of various types of three-dimensional fabrication or printing techniques, including methods in which construction of a three-dimensional object is performed in a step-wise or layer-by-layer manner. In such methods, layer formation may be performed by solidification (curing) of the curable compositions under the action of exposure to radiation, such as visible, UV or other actinic irradiation. For example, new layers may be formed at the top surface of the growing object or at the bottom surface of the growing object. The curable compositions as described herein may also be advantageously employed in methods for the production of three-dimensional objects by additive manufacturing wherein the method is carried out continuously. For example, the object may be produced from a liquid interface. Suitable methods of this type are sometimes referred to in the art as "continuous liquid interface (or interphase) product (or printing)" ("CLIP") methods. Such methods are described, for example, in WO 2014/126830; WO 2014/126834; WO 2014/126837;
and Tumbleston et al., "Continuous Liquid Interface Production of 3D Objects," Science 347 (6228), 1349-1352 (2015), the entire disclosures of which are incorporated herein by reference in their entireties for all purposes.

When stereolithography is conducted above an oxygen-permeable build window, the production of an article using a curable composition as described herein may be enabled in a CLIP procedure by creating an oxygen-containing "dead zone" which is a thin uncured layer of the curable composition between the window and the surface of the cured article as it is being produced. In such a process, a curable composition is used in which curing (polymerization) is inhibited by the presence of molecular oxygen; such inhibition is typically observed, for example, in curable compositions which are capable of being cured by free radical mechanisms. The dead zone thickness which is desired may be maintained by selecting various control parameters such as photon flux and the optical and curing properties of the curable composition. The CLIP process proceeds by projecting a continuous sequence of actinic radiation (e.g., UV) images (which may be generated by a digital light-processing imaging unit, for example) through an oxygen-permeable, actinic radiation- (e.g., UV-) transparent window below a bath of the curable composition maintained in liquid form. A liquid interface below the advancing (growing) article is maintained by the dead zone created above the window. The curing article is continuously drawn out of the curable composition bath above the dead zone, which may be replenished by feeding into the bath additional quantities of the curable composition to compensate for the amounts of curable composition being cured and incorporated into the growing article.

In another embodiment, the curable composition may be supplied by ejecting it from a print head rather than supplying it from a vat. This type of process is commonly referred to as inkjet or multi jet 3D printing. One or more UV curing sources mounted just behind the inkjet print head cures the curable composition immediately after it is applied to the build surface substrate or to previously applied layers. Two or more print heads can be used in the process which allows application of different compositions to different areas of each layer. For example, compositions of different colors or different physical properties can be simultaneously applied to create 3D printed parts of varying composition. In a common usage, support materials - which are later removed during post-processing - are deposited at the same time as the compositions used to create the desired 3D printed part. The printheads can operate at temperatures from about 25 °C up to about 100 °C. Viscosities of the curable compositions are less than 30 mPa-s at the operating temperature of the printhead.

The process for the preparation of a 3D printed article may comprise the steps of:
a) providing (e.g., coating) a first layer of the curable composition as described herein onto a surface;
b) curing the first layer, at least partially, to provide a cured first layer;
c) providing (e.g., coating) a second layer of the curable composition as described herein onto the cured first layer;
d) curing the second layer, at least partially, to provide a cured second layer adhered to the cured first layer; and
e) repeating steps c) and d) a desired number of times to build up the 3D printed article.

The process for the preparation of a 3D printed article may comprise the steps of:
a) providing (e.g., coating) a first layer of the curable composition as described herein in liquid form onto a surface;
b) exposing the first layer image-wise to actinic radiation to form a first exposed imaged cross-section, wherein the actinic radiation is of sufficient intensity and duration to cause at least partial curing of the layer in the exposed areas;
c) providing (e.g., coating) an additional layer of the curable composition as described herein onto the previously exposed imaged cross-section;
d) exposing the additional layer image-wise to actinic radiation to form an additional imaged cross-section, wherein the actinic radiation is of sufficient intensity and duration to cause at least partial curing of the additional layer in the exposed areas and to cause adhesion of the additional layer to the previously exposed imaged cross-section;
e) repeating steps c) and d) a desired number of times to build up the 3D printed article.

Either of the two methods above may further comprise step f) exposing the 3D printed article to actinic radiation, wherein the actinic radiation is of sufficient intensity and duration to cause at least 50 wt. %, at least 60 wt. %, at least 70 wt. %, at least 80 wt. %, at least 90 wt. %, at least 95 wt. %, or even at least 99 wt. % of the polymerizable components in the curable composition to cure, based on the total weight of polymerizable components in the curable composition. The entirety of, or portions of, the 3D printed article may be exposed to the actinic radiation.

Although the curing steps may be carried out by any suitable means, which will in some cases be dependent upon the components present in the curable composition, in certain embodiments of the disclosure the curing is accomplished by exposing the layer to be cured to an effective amount of radiation, in particular actinic radiation. Actinic radiation may include, for example, electron beam radiation, UV radiation, and visible light radiation. The 3D printed article which is formed may be heated in order to effect thermal curing.

After the 3D printed article has been printed, it may be subjected to one or more post-processing steps. The post-processing steps can be selected from one or more of the following steps removal of any printed support structures, washing with water and/or organic solvents to remove residual resins, and post-curing using thermal treatment and/or actinic radiation either simultaneously or sequentially. The post-processing steps may be used to transform the freshly printed article into a finished, functional article ready to be used in its intended application.

In some embodiments of the one or more post-processing steps, curing may be accelerated or facilitated by supplying energy to the curable composition, such as by heating the curable composition. An actinically-curable composition may be cured by exposure to actinic radiation, with further curing being achieved by heating the partially cured article. For example, an article formed from the curable composition (e.g., a 3D printed article) may be heated at a temperature of from 40°C to 250°C for a period of time of from 5 minutes to 12 hours.

A 3D printed article may comprise the curable composition as described herein. Upon curing, the 3D printed article may comprise the actinically-cured composition as described herein. It should be understood that some portions of the 3D printed article may comprise the curable composition while other portions of the same article may comprise the actinically-cured composition.

### Aspects of the Invention

Aspect 1. A curable composition comprising, consisting essentially of, or consisting of at least 25 wt%, based on the total weight of the polymerizable components, of at least one isocyanurate-containing monomer having at least one (meth)acrylate group; at least 5 wt%, based on total weight of the polymerizable components, of a phosphorus-containing non-reactive filler, where the filler is in a solid form at room temperature and contains at least 10% by weight of phosphorus; and a free radical photoinitiator, wherein the composition is substantially free of any halogens.
Aspect 2. The curable composition of Aspect 1, wherein the composition is a liquid dispersion at room temperature.
Aspect 3. The curable composition of Aspect 1 or Aspect 2, wherein the composition contains less than 5 wt% of a reactive flame retardant.
Aspect 4. The curable composition of any of Aspects 1 to 3, wherein the composition does not contain polyamide-forming monomers.
Aspect 5. The curable composition of any of Aspects 1 to 4, wherein the phosphorus-containing non-reactive filler is in a particulate form.
Aspect 6. The curable composition of any of Aspects 1 to 5, wherein the at least one isocyanurate-containing monomer has at least two (meth)acrylate groups.
Aspect 7. The curable composition of any of Aspects 1 to 6, wherein the at least one isocyanurate-containing monomer has at least 3 (meth)acrylate groups.
Aspect 8. The curable composition of any of Aspects 1 to 7, wherein the phosphorus-containing filler is a phosphinate filler.
Aspect 9. The curable composition of any of Aspects 1 to 8, wherein the phosphorus-containing filler is a phosphonate filler.
Aspect 10. The curable composition of any of Aspects 1 to 9, wherein the phosphorus-containing filler is a phosphate filler (such as an inorganic phosphate filler).
Aspect 11. The curable composition of any of Aspects 1 to 10, further comprising at least one non-acrylic isocyanurate-containing monomer.
Aspect 12. The curable composition of Aspect 11, wherein the non-acrylic isocyanurate-containing monomer has at least one allyl group.
Aspect 13. The curable composition of Aspect 11, wherein the non-acrylic isocyanurate-containing monomer has at least two allyl groups.
Aspect 14. The curable composition of Aspect 11, wherein the non-acrylic isocyanurate-containing monomer has at least three allyl groups.
Aspect 15. The curable composition of Aspect 11, wherein the non-acrylic isocyanurate-containing monomer has at least one thiol group.
Aspect 16. The curable composition of Aspect 11, wherein the non-acrylic isocyanurate-containing monomer has at least two thiol groups.
Aspect 17. The curable composition of Aspect 11, wherein the non-acrylic isocyanurate-containing monomer has at least three thiol groups.
Aspect 18. The curable composition of Aspect 11, wherein a non-acrylic isocyanurate-containing monomer having at least one allyl group and a non-acrylic isocyanurate-containing monomer having at least one thiol group are both present in the composition.
Aspect 19. The curable composition of any of Aspects 1 to 18, further comprising at least one ethylenically unsaturated monomer and/or oligomer not containing an isocyanurate group.
Aspect 20. The curable composition of Aspect 19, wherein the ethylenically unsaturated monomer and/or oligomer has at least one (meth)acrylate group.
Aspect 21. The curable composition of any of Aspects 1 to 20, further comprising at least one cationically-curable monomer.
Aspect 22. The curable composition of any of Aspects 1 to 21, further comprising at least one cationically-curable resin.
Aspect 23. The curable composition of Aspect 21, wherein the cationically-curable monomer has at least one epoxy group.
Aspect 24. The curable composition of Aspect 21, wherein the cationically-curable monomer has at least one oxetane group.
Aspect 25. The curable composition of Aspect 22, wherein the cationically-curable resin is an epoxy resin.
Aspect 26. The curable composition of Aspect 22, wherein the cationically-curable resin is an oxetane resin.
Aspect 27. The curable composition of any of Aspects 1 to 26, further comprising a wetting agent.
Aspect 28. The curable composition of any of Aspects 1 to 27, further comprising one or more ultraviolet blockers, pigments, dyes, stabilizers, inhibitors, antioxidants, ultraviolet absorbers, photostabilizers, foam inhibitors, flow or leveling agents, colorants, dispersants, diluents, slip additives, fillers other than the phosphorus-containing fillers described herein, thixotropic agents, matting agents, accelerators, adhesion promoters, tackifiers, polymers other than those described herein and waxes.
Aspect 29. A partially cured composition formed from the curable composition of any of Aspects 1 to 28.
Aspect 30. A cured composition formed from the curable composition of any of Aspects 1 to 28.
Aspect 31. The cured composition of Aspect 30, having a UL 94 rating of V-2 or better.
Aspect 32. The cured composition of Aspect 30, having a UL 94 rating of V-1 or better.
Aspect 33. The cured composition of Aspect 30, having a UL 94 rating of V-0.
Aspect 34. An article comprising the curable composition of any of Aspects 1 to 28 or a cured composition of any of Aspects 30 to 33.
Aspect 35. A three dimensional printed article formed from the curable composition of any of Aspects 1 to 28 or comprising the partially cured composition of Aspect 29 or comprising the cured composition of any of Aspects 30 to 33.
Aspect 36. A method of increasing the flame retardancy of an article comprising coating at least one surface of the article with the curable composition according to any of Aspects 1-28.

### EXAMPLES

### Abbreviations

SR368 - tris(2-hydroxyethyl)isocyanurate triacrylate
SR533 - 1,3,5-tri-2-propenyl-1,3,5-triazine-2,4,6(1H,3H,5H)-trione
SR606A - neopentylglycol hydroxypivalate diacrylate
TEMPIC - tris[(3-mercaptopropionyloxy)-ethyl]-isocyanurate
TPO-L - ethyl phenyl(2,4,6-trimethylbenzoyl)phosphinate
OP945 - organic phosphinate particles
AP423 - inorganic phosphate particles
TEP - triethyl phosphate
OB+ - 2,2'-(2,5-thiophenediyl)-bis(5-tert-butylbenzoxazole)
BYK-1799 - Si-containing surface additive
Q1301 - *N*-nitrosophenylhydroxylamine aluminium salt
MeHQ - 4-methoxyphenol
TBC - 4-tert-butylcatechol
HQ- hydroquinone

### Preparation of the Curable Composition of the Invention

The curable compositions from Tables 1 and 2 were prepared as follows: 200g of liquid resin was prepared by combining the listed components in the amounts described in their respective tables and stirring them via magnetic stir plate at 65 °C for 1-3 hours. Once all of the components are fully mixed, the resin is cooled, and solid fillers are added and mixed in thoroughly using a high shear blade and overhead stand mixer.

**Table 1**

| **Component** | **Description** | **Weight %** |
|---|---|---|
| SR368 | Isocyanurate acrylate | 50% |
| SR606A | Acrylate | 50% |
| TPO-L | Photoinitiator | 2% |
| OP945 or AP423 | organic phosphinate OR inorganic phosphate | 20% |

**Table 2**

| **Component** | **Description** | **Weight %** |
|---|---|---|
| SR368 | Isocyanurate acrylate | 49% |
| SR533 | Isocyanurate allyl | 21% |
| TEMPIC | Isocyanurate thiol | 30% |
| TPO-L | Photoinitiator | 2% |
| OB+ | UV blocker | 0.05% |
| OP945 or AP423 | organic phosphinate OR inorganic phosphate | 10% |

### UL-94 FR Test

The UL-94 ratings of compositions which passed stability testing were assessed according to the UL-94 standard for a vertical burn test. Full details of the testing method are found in Section 8 of the UL-94 standard. However, a synopsis of the method is given here for illustration purposes only: the test used a rectangular specimen measuring 125±5 mm x 13±0.5 mm. The long axis of the test specimen was vertically oriented, and a cotton indicator placed below the specimen. The bottom end of the specimen was lit with a Bunsen burner for 10 seconds. After removal of the flame, the time for the specimen to extinguish was as recorded. After extinguishing, the sample was relit for an addition 10 seconds. After removal of the flame, the time required for the specimen to extinguish a second time was recorded as well as the time for cessation of afterglow. Material flame resistance was classified using the criteria in Table 8.1 of the UL-94 standard. UL-94 results for the compositions of Tables 1 and 2 are summarized in Table 3, wherein a V-0 rating is the best possible classification for a tested composition under the UL-94 standard for a vertical burn test and "NR" means "no rating".

**Table 3**

| | | **FR Compositions (wt %)** | | | | | | | | | |
|---|---|---|---|---|---|---|---|---|---|---|---|
| **Components** | | **1** | **2** | **3** | **4** | **5** | **6** | **7** | **8** | **9** | **10** |
| **Solid Filler (relative to total wt of liquid resin)** | | | | | | | | | | | |
| | Fumed Silica AP423 | 10 | 20 | 30 | 40 | 10 | 20 | 30 | 10 | 20 | |

| **Liquid Resin** | | | | | | | | | | | |
|---|---|---|---|---|---|---|---|---|---|---|---|
| | SR368 | 49 | 49 | 49 | 49 | 48 | 48 | 48 | 48 | 48 | 48 |
| | SR533 | | | | | 21 | 21 | 21 | 21 | 21 | 21 |
| | TEMPIC | | | | | 29 | 29 | 29 | 29 | 29 | 29 |
| | SR606A | 49 | 49 | 49 | 49 | | | | | | |
| | TPO-L | 2 | 2 | 2 | 2 | 2 | 2 | 2 | 2 | 2 | 2 |

| **UL-94 Rating** | | | | | | | | | | | |
|---|---|---|---|---|---|---|---|---|---|---|---|
| | @ 3.2 mm | NR | V-0 | V-0 | V-0 | NR | NR | NR | V-0 | V-0 | NR |
| | @ 1.6 mm | NR | V-1 | V-0 | V-0 | NR | NR | NR | NR | V-0 | NR |
| | @ 0.8 mm | NR | V-1 | V-0 | V-0 | NR | NR | NR | NR | NR | NR |

### Filter Leaching via Mass Loss Testing

UL-94 bars were cured using the desired composition(s) and weighed the same day. The bars were placed in an 80 °C oven for 14 days and weighed for mass loss relative to their original weight. The results are shown in Table 4.

**Table 4**

| **FR Composition** | | | | | | |
|---|---|---|---|---|---|---|
| **Filler (wt %)** | **10** | **8** | **9** | **11** | **12** | **13** |
| OP945 | | | | | 10 | 20 |
| AP423 | | 10 | 20 | | | |
| TEP | | | | 20 | | |

| **Mass Loss (% loss after_ @ 80°C)** | | | | | | |
|---|---|---|---|---|---|---|
| **24 hours** | 0.7% | 0.2% | 0.3% | 3.0% | 0.6% | 0.5% |
| **14 Days** | 0.7% | 0.2% | 0.4% | 5.5% | 0.6% | 0.5% |

The invention as described is intended to cover not only individual aspects or exemplary embodiments of the invention but also combinations of all aspects and embodiments.

## Claims

1. A curable composition comprising:
- at least 25 wt%, based on the total weight of polymerizable components, of at least one isocyanurate-containing monomer having at least one (meth)acrylate group;
- at least 5 wt%, based on the total weight of polymerizable components, of a phosphorus-containing non-reactive filler, where the filler is in a solid form at room temperature and contains at least 10% by weight of phosphorus; and
- a free radical photoinitiator,
wherein the composition is substantially free of any halogens.

2. The curable composition according to claim 1, wherein the composition is a liquid dispersion at room temperature.

3. The curable composition according to claim 1 or claim 2, wherein the composition contains less than 5 wt% of a reactive flame retardant based on the total weight of polymerizable components.

4. The curable composition according to any one of claims 1-3, wherein the composition does not contain polyamide-forming monomers.

5. The curable composition according to any one of claims 1-4, wherein the at least one isocyanurate-containing monomer has at least two (meth)acrylate groups, preferably at least 3 (meth)acrylate groups.

6. The curable composition according to any one of claims 1-5, wherein the phosphorus-containing filler is a phosphinate filler or a phosphonate filler or an inorganic phosphate filler.

7. The curable composition according to any one of claims 1-6, further comprising at least one non-acrylic isocyanurate-containing monomer.

8. The curable composition according to claim 7, wherein the at least one non-acrylic isocyanurate-containing monomer has least one allyl group, preferably at least two allyl groups, more preferably at least three allyl groups.

9. The curable composition according to claim 7, wherein the at least one non-acrylic isocyanurate-containing monomer has at least one thiol group, preferably at least two thiol groups, more preferably at least three thiol groups.

10. The curable composition according to any one of claims 1-9, further comprising at least one ethylenically unsaturated monomer and/or oligomer not containing an isocyanurate group.

11. The curable composition according to any one of claims 1-10, further comprising at least one cationically-curable monomer.

12. A cured composition formed from the curable composition according to any one of claims 1-11.

13. The cured composition according to claim 12, wherein the cured composition has a UL 94 rating of V-2 or better.

14. A three dimensional printed article comprising the cured composition according to claim 12 or claim 13.

15. A method of increasing the flame retardancy of an article comprising coating at least one surface of the article with the curable composition according to any one of claims 1-11.
